# EUROPÄISCHE PATENTSCHRIFT

(11) **EP 0 852 190 B1**
(45) Veröffentlichungstag und Bekanntmachung des Hinweises auf die Patenterteilung: **27.10.1999**
(21) Anmeldenummer: 96120482.3
(22) Anmeldetag: 19.12.1996
(51) Int. Cl.: B60Q 1/068

(54) **Gelenkstück**
Connecting piece
Pièce de liaison

(43) Veröffentlichungstag der Anmeldung: 08.07.1998
(73) Patentinhaber: Hella KG Hueck & Co., 59552 Lippstadt (DE)
(72) Erfinder: Herbers, Thomas, 59552 Lippstadt (DE)

(56) Entgegenhaltungen:
- EP-A- 0 640 510
- US-A- 5 079 676

## Beschreibung

Die Erfindung betrifft ein Gelenkstück zum Verschwenken eines um eine erste Achse und um eine senkrecht zur ersten Achse angeordnete zweite Achse verschwenkbaren Reflektors eines Kraftfahrzeugscheinwerters, das an seinem dem Reflektor abgewandten Ende eine Gelenkschale aufweist, die mit einem zum Verschwenken um die erste Achse translatorisch verschiebbaren Kugelkopf einer Einstellvorrichtung verbindbar ist, wobei der Kugelkopf in die Gelenkschale einrastbar ist..

Aus der DE -U-93 12 695.6 ist ein Kraftfahrzeugscheinwerfer bekannt, dessen Reflektor über ein Gelenkstück um eine horizontale Achse verschwenkbar ist. Über ein zweites Gelenkstück ist der Reflektor zusätzlich um eine vertikale Achse schwenkbar. Das Verschwenken des Reflektor um die horizontale Achse dient zu einer Lichtweitenregulierung des Scheinwerfers. Zu diesem Zweck weist der Reflektor einen in vertikaler Richtung oben ein feststehendes Gelenk auf, um das der Reflektor verschwenkt werden kann. Das Gelenkstück ist in im vertikaler Richtung unten liegenden Bereich mit seinem dem Reflektor zugewandten Ende mit der Rückseite des Reflektors verbindbar, so daß seine Längsachse etwa parallel zu einer Fahrzeuglängsachse verläuft. An seinem dem Reflektor abgewandten Ende weist das Gelenkstück eine Gelenkschale auf, über die es mit einer Gelenkkugel einer Einstellvorrichtung verbunden ist. Durch die Einstellvorrichtung ist die Gelenkkugel translatorisch verschiebbar.

Bei der Montage des Reflektors wird die Gelenkschale des Gelenkstückes selbstrastend mit dem Kugelkopf der Einstellvorrichtung verbunden. Hierzu muß das Gelenkstück in seiner Längsrichtung relativ hohe Rastkräfte aufnehmen, ohne seitlich wegzuknicken. Durch die Einstellvorrichtung wird der Kugelkopf linear bewegt, während beim Verschwenken des Reflektors die Gelenkschale sich auf einer Kreisbahn bewegt.

Um Verspannungen des Reflektors und auf den Kugelkopf wirkende Radialkräfte der Gelenkschale gering zu halten, ist das Gelenkstück zur Schwenkachse bzw. horizontalen Achse hin - also in einer quer zur horizontalen Achse angeordneten Ebene - biegbar bzw. elastisch ausgebildet. Dadurch werden auf den Kugelkopf wirkende Radialkräfte in der Richtung quer zur horizontalen Achse verringert. Beim Verschwenken um die zweite vertikale Schwenkachse entstehen in einer quer zur vertikalen Schwenkachse angeordneten Ebene aber unerwünschte, auf den Kugelkopf wirkende Radialkräfte.

Aufgabe der vorliegenden Erfindung ist es daher, das bekannte Gelenkstück so zu verbessern, daß an dem Kugelkopf auftretende Radialkräfte in beiden Ebenen weiter verringert bzw. vermieden werden.

Die Aufgabe wird erfindungsgemäß dadurch gelöst, daß das Gelenkstück in einer quer zur zweiten Achse angeordneten Ebene biegbar ausgebildet ist und daß die Gelenkschale quer zu einer Längsachse des Gelenkstücks gegenüber dem Kugelkopf entlang einer parallel zur zweiten Achse verlaufenden Schalenachse verschieblich ausgebildet ist.

Dadurch, daß einerseits das Gelenkstück quer zur zweiten Achse biegbar und andererseits die Gelenkschale quer zur Längsachse des Gelenkstückes beim Verschwenken um die erste Achse, beispielsweise um eine horizontale Achse, gegenüber dem Kugelkopf quer zur Längsachse des Gelenkstückes verschieblich ausgebildet ist, werden beim Verschwenken um die erste und zweite Achse keine radialen Kräfte in die Einstellvorrichtung eingeleitet. Gleichzeitig kann das Gelenkstück zur Montage mit relativ hohen Rastkräften belastet werden.

Nach einer bevorzugten Ausführungsform der Erfindung ist zwischen Gelenkschale und dem der Gelenkschale abgewandten Ende eine quer zur Längs- und quer zur Schalenachse elastisch verformbare Verbindung angeordnet, die zwei parallel zueinander verlaufende Verbindungsstege aufweist. Durch die Verbindungsstege ist es möglich, das aus Kugelkopf und Gelenkschale bestehende Gelenk in einem relativ großen Abstand zum Reflektor anzuordnen. Die radialen Kräfte beim Verschwenken um die vertikale Achse können dabei relativ klein gehalten werden.

Nach einer weiteren bevorzugten Ausführungsform der Erfindung ist zwischen den Verbindungsstegen an dem der Gelenkschale abgewandten Ende eine Anschlagrippe angeordnet. Durch die Anschlagrippe wird die elastische Verformung und die vertikale Achse begrenzt. Zugleich wird durch die Anschlagrippe beim Aufbringen einer starken Rastkraft ein Ausknicken der Verbindungsstege verhindert bzw. begrenzt.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

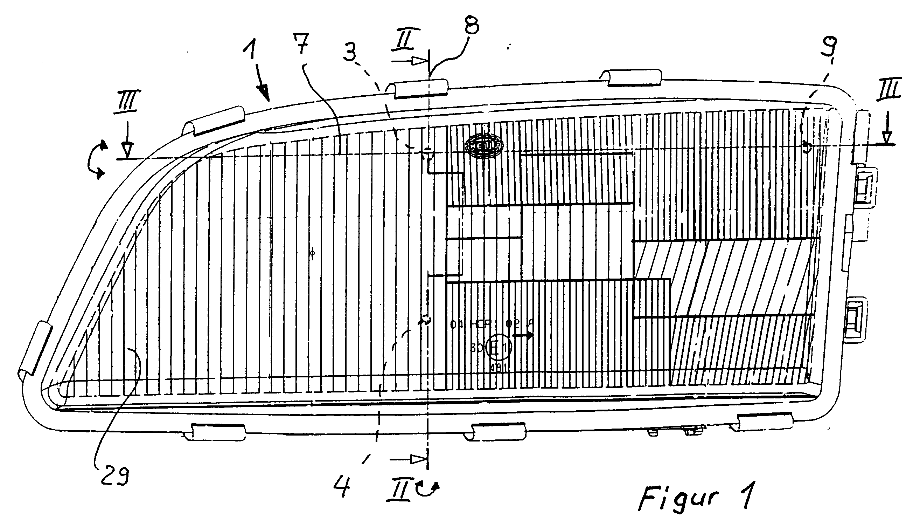

- Figur 1:: Eine Vorderansicht eines Kraftfahrzeugscheinwerfers in verkleiner ter Darstellung,

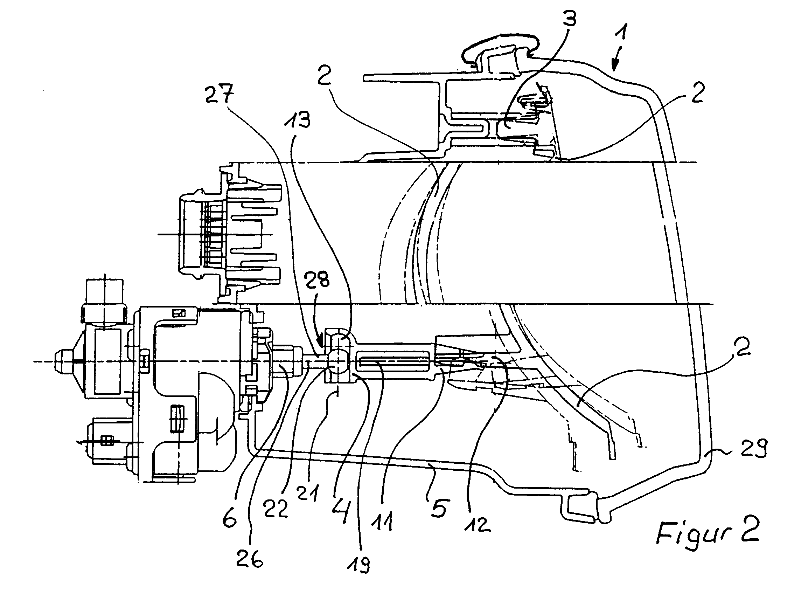

- Figur 2:: eine Seitenansicht des Kraftfahrzeugscheinwerfers von Figur 1, entlang der Linie II-II geschnitten,

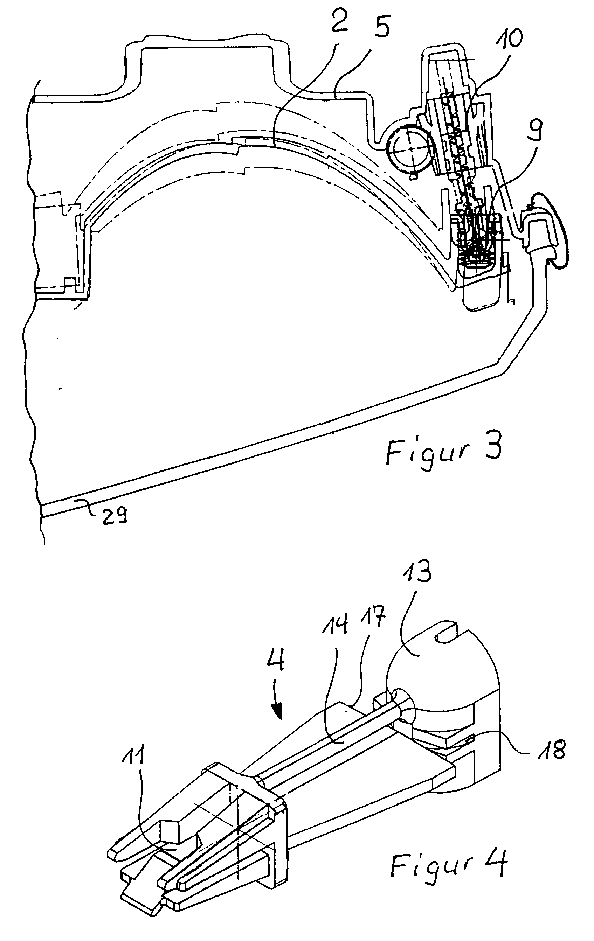

- Figur 3:: eine Draufsicht auf den Kraftfahrzeugscheinwerfer von Figur 1, entlang der Linie III-III geschnitten,
- Figur 4:: eine räumliche Darstellung eines Gelenkstückes in vergrößerter Darstellung,

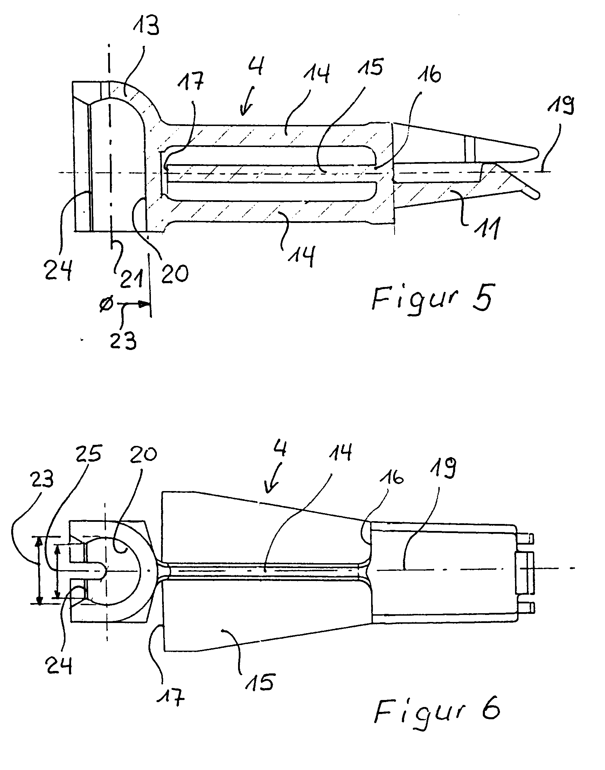

- Figur 5:: eine Seitenansicht eines Gelenkstückes in vergrößerter Darstel lung im Schnitt und
- Figur 6:: eine Untersicht unter das Gelenkstück von Figur 5.

Ein Kraftfahrzeugscheinwerfer (1) besteht im wesentlichen aus einem Reflektor (2), einem festen Gelenk (3), einem Gelenkstück (4) und einer an einem Aufnahmeteil (5) angeordneten Einstellvorrichtung (6). Der Reflektor (2) ist um eine horizontale erste Achse (7), die durch das feste Gelenk (3) verläuft, schwenkbar. Weiterhin ist der Reflektor (2) um eine vertikale zweite Achse (8), die ebenfalls durch das feste Gelenk (3) verläuft, schwenkbar. In einem Abstand zur vertikalen Achse (8) ist auf der horizontalen Achse (7) ein zweites Gelenkstück (9), das den Reflektor (2) mit einer Antriebsvorrichtung (10) zum Verschwenken um die vertikale Achse (8) verbindet, angeordnet. Das zweite Gelenkstück (9) kann dem (ersten) Gelenkstück (4) entsprechen. Es wird dann jedoch vorzugsweise um einen Winkel von 90° gegenüber dem Gelenkstück (4) um seine Längsachse gedreht. Das Aufnahmeteil (5) ist von einer Streuscheibe (29) abgedeckt.

Das Gelenkstück (4) weist an seinem dem Reflektor (2) zugewandten Ende ein Rastteil (11) auf. Das Rastteil (11) ist mit einem entsprechenden Gegenstück (12) des Reflektors (2) einrastend verbindbar. An seinem dem Rastteil (11) abgewandten Ende weist das Gelenkstück (4) eine Gelenkschale (13) auf. Rastteil (11) und Gelenkschale (13) sind über zwei in vertikaler Richtung übereinander in einem Abstand angeordnete Verbindungsstege (14), die parallel zueinander verlaufen, verbunden. Die Verbindungsstege (14) weisen einen ovalen Querschnitt auf. Es ist aber auch möglich, die Verbindungsstege (14) mit einem runden oder rechteckigen Querschnitt auszubilden. Zwischen den Verbindungsstegen (14) ist an dem Rastteil (11) eine Anschlagrippe (15) angeordnet.

Die Anschlagrippe (15) ist als eine flache etwa trapezförmige Zunge ausgebildet, die mit ihrer schmalen Basisfläche (16) an dem Rastteil (11) angeordnet bzw. angeformt ist. Die der schmalen Basisfläche (16) gegenüberliegende breite Basisfläche (17) weist zu der Gelenkschale (13) einen Abstand auf. Bei einer Biegung der Verbindungsstege (14) um eine vertikale Achse, schlägt die Gelenkschale (13) mit einer ihrer der Anschlagrippe zugewandten Anschlagflächen (18) gegen die breite Basisfläche (17) der Anschlagrippe (15). Das Gelenkstück (4) weist eine Längsachse (19) auf, die durch die Anschlagrippe (15) verläuft. Die Gelenkschale (13) weist eine zylindrische Innenform (20) auf, deren Schalenachse (21) in vertikaler Richtung angeordnet ist. Quer zur Schalenachse (21) weist die zylindrische Innenform (20) einen an einen Kugelkopf (22) der Einstellvorrichtung (6) angepaßten Durchmesser (23) auf. Zu der Einstellvorrichtung (6) hin weist die Gelenkschale (13) eine vertikale Längsnut (24) auf, deren Breite (25) so ausgebildet ist, daß der Kugelkopf (22) über die Längsnut (24) in die Gelenkschale (13) bzw. die zylindrische Innenform (20) einrasten kann. Der Kugelkopf (22) ist am freien Ende einer in Richtung ihrer Längsachse (26) translatorisch verschiebbaren Einstellachse (27) der Einstellvorrichtung (6) angeordnet. Der Kugelkopf (22) ist in der Gelenkschale (13) in Richtung der Schalenachse (21) längsverschieblich angeordnet. Die Längsachse (26) ist etwa fluchtend zur Längsachse (19) des Gelenkstückes (4) angeordnet. Es ist aber auch möglich, die Längsachse (26) der Einstellachse (27) in einem Winkel zur Längsachse (19) des Gelenkstückes (4) anzuordnen.

Zur Montage des Reflektors (2) wird das Gelenkstück (4) mit seinem Rastteil (11) so über das Gegenstück (12) geschoben, daß das Rastteil (11) im Gegenstück (12) einrastet. Der Reflektor (2) wird so auf das Aufnahmeteil (5) gesetzt, daß die Gelenkschale (13) auf dem Kugelkopf (22) der Einstellvorrichtung (6) aufsitzt. Durch Aufbringen einer Rastkraft in Richtung der Längsachse (19) wird der Reflektor (2) in das Aufnahmeteil (5) eingesetzt, wobei der Kugelkopf (22) der Einstellvorrichtung (6) in die Gelenkschale (13) des Gelenkstückes (4) einrastet und das zweite Gelenkstück (9) mit der Antriebsvorrichtung (10) und der Reflektor (2) mit dem festen Gelenk (3) verbunden wird.

## Patentansprüche

1. Gelenkstück zum Verschwenken eines um eine erste Achse und um eine senkrecht zur ersten Achse angeordnete zweite Achse veschwenkbaren Reflektors eines Kraftfahrzeugscheinwerfers, das an seinem dem Reflektor abgewandten Ende eine Gelenkschale aufweist, die mit einem zum Verschwenken um die erste Achse translatorisch verschiebbaren Kugelkopf einer Einstellvorrichtung verbindbar ist, wobei der Kugelkopf in die Gelenkschale einrastbar ist, und das an seinem der Gelenkschale abgewandten Ende mit dem Reflektor verbindbar ist dadurch gekennzeichnet, daß das Gelenkstück (4) in einer quer zur zweiten Achse (8) angeordneten Ebene biegbar ausgebildet ist und daß die Gelenkschale (13) quer zu einer Längsachse (19) des Gelenkstücks (4) gegenüber dem Kugelkopf (22) entlang einer parallel zur zweiten Achse (8) verlaufenden Schalenachse (21) verschieblich ausgebildet ist.

2. Gelenkstück nach Anspruch 1, dadurch gekennzeichnet, daß die Gelenkschale (13) quer zu der Längsachse (19) zylinderförmig ausgebildet ist und eine Längsnut (24) aufweist, deren Breite (25) so ausgebildet ist, daß der Kugelkopf (22) über die Längsnut (24) in die Gelenkschale (13) einrasten kann.

3. Gelenkstück nach einem der Ansprüche 1 bis 2, dadurch gekennzeichnet, daß zwischen Gelenkschale (13) und dem der Gelenkschale (13) abgewandten Ende eine quer zur Längsachse (19) des Gelenkstückes (4) und quer zur Schalenachse (21) der Gelenkschale (13) elastisch verformbare Verbindung angeordnet ist.

4. Gelenkstück nach Anspruch 3, dadurch gekennzeichnet, daß die elastische Verbindung zwei in einem Abstand zueinander parallel verlaufende Verbindungsstege (14) aufweist.

5. Gelenkstück nach Anspruch 4, dadurch gekennzeichnet, daß zwischen den Verbindungsstegen (14) an dem der Gelenkschale (13) abgewandten Ende eine Anschlagrippe (15) angeordnet ist.

6. Gelenkstück nach einem der Ansprüche 1 oder 5, dadurch gekennzeichnet, daß der Reflektor (2) um eine horizontale Achse (7) verschwenkbar ist, zu der die Längsachse (19) des Gelenkstückes (4) in einem Abstand etwa rechtwinklig und etwa horizontal verläuft, und daß die Gelenkschale (13) eine Schalenachse (21) aufweist, die etwa vertikal angeordnet ist.

7. Gelenkstück nach einem der Ansprüche 2 bis 6, dadurch gekennzeichnet, daß der Kugelkopf (22) etwa in Richtung der Längsachse (19) des Gelenkstückes (4) translatorisch verschiebbar ist.

8. Gelenkstück nach Anspruch 6 oder 7, dadurch gekennzeichnet, daß der Reflektor (2) um eine vertikale Achse (8) schwenkbar ist, die in der Nähe der Längsachse (19) des Gelenkstückes (4) verläuft.

9. Gelenkstück nach einem der Ansprüche 1 bis 8, dadurch gekennzeichnet, daß das der Gelenkschale (13) abgewandte Ende ein Rastteil (11) aufweist, das mit einem entsprechenden Gegenstück (12) des Reflektors (2) einrastend verbindbar ist.

## Claims

1. A joint part for swivelling a reflector, which can swivel about a first axis and about a second axis disposed perpendicularly to the first axis, of a motor vehicle headlamp, comprising a joint cup at its end remote from the reflector, which joint cup can be attached to a spherical head of an adjusting device, which spherical head can be displaced in translation for swivelling about the first axis, wherein the spherical head can be locked into the joint cup and at its end remote from the joint cup can be attached to the reflector, characterised in that the joint part (4) is constructed so that it is flexible in a plane disposed transversely to the second axis (8) and that the joint cup (13) is constructed so that it is displaceable in relation to the spherical head (22) transversely to a longitudinal axis (19) of the joint part (4) along a cup axis (21) extending parallel to the second axis (8).

2. A joint part according to claim 1, characterised in that the joint cup (13) is of cylindrical construction transverse to the longitudinal axis (19) and comprises a longitudinal slot (24), the width (25) of which is designed so that the spherical head (22) can lock into the joint cup (13) via the longitudinal slot (24).

3. A joint part according to either one of claims 1 or 2, characterised in that a connection which is flexibly deformable transversely to the longitudinal axis (19) of the joint part (4) and transversely to the cup axis (21) of the joint cup (13) is disposed between the joint cup (13) and the end remote from the joint cup (13).

4. A joint part according to claim 3, characterised in that the flexible connection comprises two connecting stays (14) which are parallel to and spaced apart from each other.

5. A joint part according to claim 4, characterised in that a stop rib (15) is disposed between the connecting stays (14) at the end remote from the joint cup (13).

6. A joint part according to either one of claims 1 or 5, characterised in that the reflector (2) can swivel about a horizontal axis (7) in relation to which the longitudinal axis (19) of the joint part (4) extends at a distance and approximately at right angles, and approximately horizontally, and that the joint cup (13) has a cup axis (21) which is disposed approximately vertically.

7. A joint part according to any one of claims 2 to 6, characterised in that the spherical head (22) can be displaced in translation approximately in the direction of the longitudinal axis (19) of the joint part (4).

8. A joint part according to claims 6 or 7, characterised in that the reflector (2) can swivel about a vertical axis (8) which extends in the vicinity of the longitudinal axis (19) of the joint part (4).

9. A joint part according to any one of claims 1 to 8, characterised in that the end remote from the joint cup (13) comprises a locking part (11) which can be attached to and locked into a corresponding counter-part (12) of the reflector (2).

## Revendications

1. Pièce articulée destinée à faire pivoter autour d'un premier axe et autour d'un second axe perpendiculaire au premier axe un réflecteur pivotant d'un phare de véhicule automobile qui présente sur son extrémité détournée du réflecteur une coque d'articulation qui est susceptible d'être reliée à une tête sphérique d'un dispositif de réglage, avec déplacement en translation pour pivoter autour du premier axe, la tête sphérique étant susceptible de s'enclencher dans la coque d'articulation, et qui est susceptible d'être reliée au réflecteur, à son extrémité détournée de la coque d'articulation, caractérisée en ce que la pièce articulée (4) est réalisée de manière flexible dans un plan agencé transversalement au second axe (8) et en ce que la coque d'articulation (13) est réalisée de manière à pouvoir être déplacée transversalement à un axe longitudinal (19) de la pièce articulée (4) par rapport à la tête sphérique (22) le long d'un axe de coque (21) s'étendant parallèlement au second axe (8).

2. Pièce articulée selon la revendication 1, caractérisée en ce que la coque d'articulation (13) est réalisée de forme cylindrique transversalement à l'axe longitudinal et en ce qu'elle présente une rainure longitudinale (24) dont la largeur (25) est telle que la tête sphérique (22) peut s'enclencher dans la coque d'articulation (13) par l'intermédiaire de la rainure longitudinale (24).

3. Pièce articulée selon l'une ou l'autre des revendications 1 et 2, caractérisée en ce que entre la coque d'articulation (13) et l'extrémité détournée de la coque d'articulation (13) est agencée une liaison élastiquement déformable transversalement à l'axe longitudinal (19) de la pièce articulée (4) et transversalement à l'axe (21) de la coque d'articulation (13).

4. Pièce articulée selon la revendication 3, caractérisée en ce que la liaison élastique présente deux barrettes de liaison (14) parallèles l'une à l'autre avec écartement.

5. Pièce articulée selon la revendication 4, caractérisée en ce qu'une nervure de butée (15) est agencée entre les barrettes de liaison (14) sur l'extrémité détournée de la coque d'articulation (13).

6. Pièce articulée selon l'une ou l'autre des revendications 1 et 5, caractérisée en ce que le réflecteur (2) est pivotable autour d'un axe horizontal (7) par rapport auquel l'axe longitudinal (19) de la pièce articulée (4) s'étend avec écartement, approximativement en angle droit et approximativement à l'horizontale, et en ce que la coque d'articulation (13) présente un axe de coque (21) qui est agencé approximativement vertical.

7. Pièce articulée selon l'une quelconque des revendications 2 à 6, caractérisée en ce que la tête sphérique (22) est susceptible d'être déplacée en translation approximativement en direction de l'axe longitudinal (19) de la pièce articulée (4).

8. Pièce articulée selon l'une ou l'autre des revendications 6 et 7, caractérisée en ce que le réflecteur (2) est pivotable autour d'un axe vertical (8) qui s'étend à proximité de l'axe longitudinal (19) de la pièce articulée (4).

9. Pièce articulée selon l'une quelconque des revendications 1 et 8, caractérisée en ce que l'extrémité détournée de la coque d'articulation (13) présente une partie d'enclenchement (11) qui est susceptible d'être reliée par enclenchement avec un pendant (12) correspondant du réflecteur (2).
